(19) Europäisches Patentamt / European Patent Office / Office européen des brevets

(11) **EP 4 776 020 A1**

(12) **EUROPEAN PATENT APPLICATION**

(43) Date of publication:
**15.07.2026 Bulletin 2026/29**

(21) Application number: **25150625.9**

(22) Date of filing: **08.01.2025**

(51) International Patent Classification (IPC):
**G01S 7/35** (2006.01)    **G01S 13/32** (2006.01)
**G01S 13/42** (2006.01)    **G01S 13/931** (2020.01)
**G01S 13/86** (2006.01)

(52) Cooperative Patent Classification (CPC):
**G01S 7/356; G01S 13/325; G01S 13/42;**
**G01S 13/931;** G01S 7/0234; G01S 13/865

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **Pandharipande, Ashish**
  **5656AG Eindhoven (NL)**
• **Wu, Hanqing**
  **5656AG Eindhoven (NL)**

(74) Representative: **Schwarzweller, Thomas**
**NXP Semiconductors Germany GmbH**
**Intellectual Property Group**
**Beiersdorfstraße 12**
**22529 Hamburg (DE)**

(54) **RADAR SYSTEM WITH ADAPTIVE CORRELATION PROCESSING**

(57) A radar apparatus includes a correlator that operates on sequences of Lc signal values to generate a correlation r[n]. Based on an object detection or map data, only certain block(s) of r[n] of length Lc/d (d is an integer) are generated from corresponding signal value blocks, or are selected for subsequent processing. Computation times for range and velocity are significantly reduced as a result. The radar apparatus adapts by generating or selecting different block(s) or r[n] based on a different object detection or different map data.

FIG. 3A

## Description

TECHNICAL FIELD

The field of the present disclosure relates to digital radar systems. In particular, apparatus and methods are disclosed for adaptive processing (e.g., correlation or DFT) in a digital radar system, such an automotive radar system.

BACKGROUND

Automotive radar, typically operating at so-called millimeter wavelengths, has become an important component of self-driving automobiles and advanced driver assistant systems (ADAS). Common implementations include multiple-input multiple-output (MIMO) radar systems, in which multiple radar transmitters illuminate an area with multiple radar output signals, and back-reflected radar return signals arising from those radar output signals are detected by multiple radar receivers. A virtual transceiver array is formed with a number of virtual array elements equal to the product of the number of transmitters and the number of receivers. The increased aperture of a MIMO radar compared to a single-transmitter system increases the capability to separate objects based upon the Direction of Arrival (DoA) of signals reflected by those objects. Implementation of a virtual transceiver array depends on the ability to distinguish among back-reflected radar signals received by each receiver that originate from different transmitters.

In many digital radar systems, each transmitted signal is modulated with a digital code that is distinct for each transmitter. During processing of the receiver signals, each receiver signal is cross-correlated with each of the digitally modulated transmitted signals. A spike in a cross-correlation signal between a given pair of transmitter and receiver signals represents a potential reception by the corresponding receiver of a back-reflected portion of a signal transmitted by the corresponding transmitter. The cross-correlation signal can be used to estimate range, or further processed to estimate velocity or angle.

SUMMARY

An adaptive radar apparatus includes radar control circuitry including at least a correlator, radar transmitter(s) operably coupled to the radar control circuitry, and radar receiver(s) operably coupled to the radar control circuitry. The correlator receives (i) from the radar transmitters, corresponding first sequences of signal values having length Lc, and (ii) from the radar receivers, corresponding second sequences of signal values having length Lc that represent radar signals received by the radar receivers. The received radar signals include reflected portion(s) of at least one transmitted radar signal. The correlator generates first blocks of signal values r[n] of a correlation, each of length Lc/d where d is an integer, from corresponding blocks of the first and second sequences of signal values. The generated first block(s) include at least one candidate object detection, and are selected based on one or more of (i) a sequence of signal values having length Lc of a correlation previously generated by the correlator from previous first and second sequences of Lc signal values, (ii) a range estimate, for at least one detected object, received from one or more sensors external to the radar apparatus, or (iii) data received from a digital map that includes a current location of the radar apparatus.

The correlator can generate second blocks of length Lc/d of signal values r[n], different from the first blocks, from corresponding blocks of subsequent first and second sequences of Lc signal values, different from the first and second sequences. The generated second blocks include at least one candidate object detection, and are selected based on one or more of (i) a different sequence of signal values having length Lc of a different correlation previously generated by the correlator from different previous first and second sequences of Lc signal values, (ii) a different range estimate, for at least one detected object, received from the one or more sensors external to the radar apparatus, or (iii) different data received from the digital map that includes a different current location of the radar apparatus.

In some examples the correlator can be arranged as a fast-time FFT correlator. In some examples the correlator can be arranged to exclude from subsequent processing those values of r[n] not in the selected blocks.

Objects and advantages pertaining to radar systems may become apparent upon referring to the example embodiments illustrated in the drawings and disclosed in the following written description or appended claims.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

BRIEF DESCRIPTION OF THE DRAWINGS

Fig. 1 is a schematic diagram of a MIMO digital radar apparatus including an adaptive correlator.

Figs. 2A and 2B are mathematical and pictorial representations, respectively, of operation of a digital FFT-based correlator. Fig. 2C is a plot of simulated example output of such a correlator.

Fig. 3A illustrates schematically a FFT-based correlator operating on d partial-length blocks of signal values $x[n]$ and $c[n]$ and reconstructing a full-length correlation $r[n]$ from the blocks. Fig. 3B is an example of a full-length correlation $r[n]$ produced using the correlator of Fig. 3A.

Fig. 4 illustrates schematically a FFT-based correlator operating on d partial-length blocks $x_i[n]$ and $c_i[n]$ of signal values and producing corresponding partial-length blocks $r_i[n]$ of a correlation ($r_1[n]$ in the example shown).

Fig. 5A is similar to Fig. 4 where d=4. Figs. 5B and 5C are schematic diagrams of FFT modules operating on 4 blocks $x_i[n]$ and $c_i[n]$, respectively. Fig. 5D is a mathematical representation of operation of the FFT module of Fig. 5B on the blocks $x_i[n]$; operation of the FFT module of Fig. 5C on the blocks $c_i[n]$ would be analogous. Figs. 5E and 5F are schematic diagrams of an IFFT module operating on blocks $\tilde{R}_i[k]$, with Fig. 5F showing additional details of the combination block. Fig. 5G is a mathematical representation of operation of the IFFT module of Figs. 5E or 5F.

Figs. 6A and 6B are schematic illustrations of digital map data that can be employed for identifying blocks of signal values.

Fig. 7 is a table of simulated values produced by an embodiment of the disclosed digital radar apparatus.

Fig. 8 is a flowchart representing a method for using one or more embodiments of the disclosed digital radar apparatus

The embodiments depicted are shown only schematically; all features may not be shown in full detail or in proper proportion; for clarity certain features or structures may be exaggerated or diminished relative to others or omitted entirely; the drawings should not be regarded as being to scale unless explicitly indicated as being to scale. The embodiments shown are only examples and should not be construed as limiting the scope of the present disclosure or appended claims.

DETAILED DESCRIPTION

The following detailed description should be read with reference to the drawings, in which identical reference numbers refer to like elements throughout the different figures. The drawings, which are not necessarily to scale, depict selective examples and are not intended to limit the scope of the various embodiments of the present disclosure. The detailed description illustrates by way of example, not by way of limitation, the principles of the subject matter of the various embodiments of the present disclosure.

As noted above, multiple-input multiple-output (MIMO) radar systems are commonly incorporated into self-driving automobiles and advanced driver assistant systems (ADAS). In a MIMO radar system, multiple radar transmitters illuminate an area with multiple radar output signals, and back-reflected radar return signals arising from those radar output signals are detected by multiple radar receivers. If the radar return signals arising from each of the radar transmitters and detected by each of the radar receivers can be distinguished from one another, then a MIMO radar system comprising M transmitters and N receivers can function as a virtual array of MxN virtual transceivers. Each virtual transceiver corresponds to a transmitter/receiver pair of only one of the M transmitters and only one of the N radar receivers. Typically, each virtual transceiver functions as if located at a corresponding virtual transceiver location that is midway along a line connecting the radar transmitter and radar receiver of the corresponding transmitter/receiver pair. Each virtual transceiver signal corresponds to one of the MxN virtual transceiver positions and arises from the corresponding transmitter/receiver pair (i.e., from a radar return signal arising from the radar transmitter output signal that is detected by the radar receiver). The angular position of an object that back-reflects radar return signals can be estimated based on the multiple virtual transceiver signals. Angular resolution can be enhanced by increasing the number of virtual transceivers, by spreading the positions of the virtual transceivers across larger distances (i.e., forming a larger device effective aperture), or both.

Various schemes can be employed so that radar return signals arising from different radar transmitters and detected by the same radar receiver can be distinguished from one another, so as to enable extraction of M distinct virtual transceiver signals from each of N electronic receiver signals. In a time division multiplexed (TDM) scheme, only one radar transmitter transmits its radar output signal at any given time. During that time, the N electronic receiver signals reflect a subset of N of the virtual transceiver signals. Cycling through a sequence of all M transmitters, with only one transmitter transmitting at any given time, yields the full set of MxN virtual transceiver signals.

Speed, throughput, and maximum detectable velocity of the MIMO radar system can be improved by operating all M radar transmitters simultaneously and extracting M distinct virtual transceiver signals (i.e., one for each of the simultaneously transmitting radar transmitters) from each of N electronic receiver signals (i.e., one from each radar receiver). In that way all MxN virtual transceiver signals can be produced concurrently. Various modulation schemes can be employed for enabling signals arising from different radar transmitters to be extracted from a single electronic receiver signal, e.g., code division multiplexed (CDM), frequency division multiplexed (FDM), Doppler division multiplexed (DDM), or orthogonal frequency-domain multiplexed (OFDM). In the present disclosure, digital MIMO radar systems are disclosed in which each transmitted radar signal is modulated with a corresponding digital code or sequence that is distinct from the digital sequences of other transmitters. Any suitable digital encoding scheme can be employed, e.g., binary phase-shift keying (BPSK). In some examples, the sequence of radar signals can be a continuous sequence. In some other examples, the sequence of radar signals can be an intermittent sequence, with intermittent sections of null values corresponding to periods during which the transmitter is turned off or not transmitting. In some examples a random or pseudo-random code generator can provide digital codes for modulating the transmitted radar signals. The received radar signals from each receiver are processed, using radar control circuitry operatively coupled to the radar transmitters and receivers and structured, connected, programmed, or otherwise configured as disclosed herein, to extract from the N electronic receiver signals the MxN virtual transceiver signals.

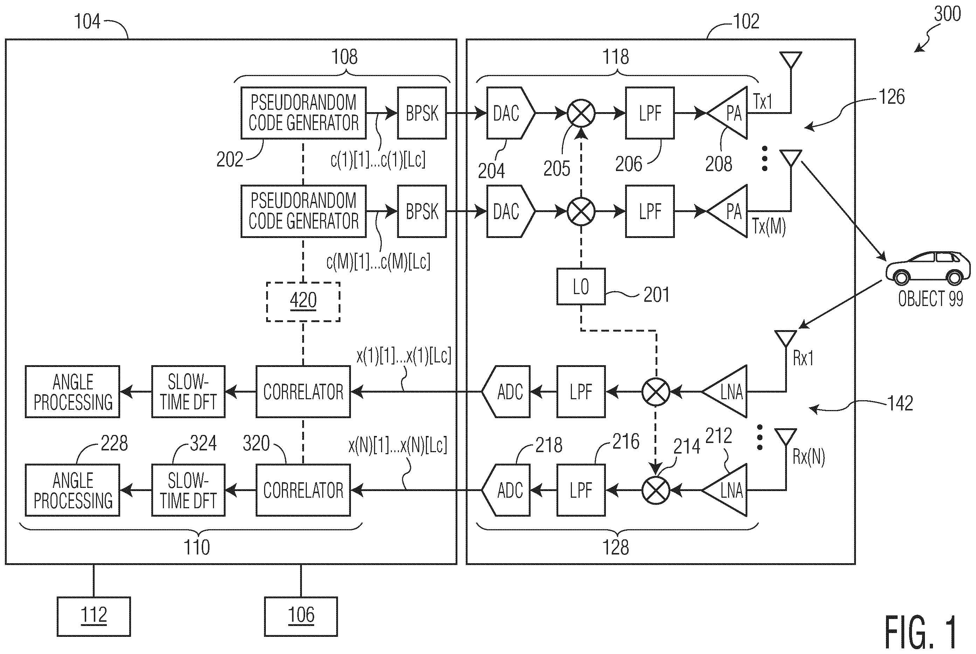

Fig. 1 illustrates schematically an example of a digital MIMO radar system 300 comprising a radar device 102 and a radar microcontroller unit (MCU) 104. The radar device 102 includes (i) a set 126 of M radar transmitters Tx1, Tx2, ..., Tx(i), ...,Tx(M) each connected to a corresponding radio-frequency (RF) transmitter module 118, and (ii) a set 142 of N radar receivers Rx1, Rx2, ..., Rx(j), ... , Rx(N) each connected to a corresponding RF receiver module 128. The transmitters Tx(i) and the receivers Rx(j) are arranged so that each transmitter/receiver pair defines a corresponding virtual transceiver position of the MIMO array. The radar MCU 104 comprises a radar controller 108 and a signal processor 110. The radar MCU 104 may be connected and configured to supply input control signals to the transmitter modules 118 (directly or via intervening components) and to receive digital output signals generated by the receiver modules 128 (directly or via intervening components). The signal processor 110 may be configured and arranged for signal processing tasks such as, but not limited to, object identification, computation of the estimated distance or range to an object, computation of the estimated radial velocity of the object, or computation of the DoA of signals back-reflected by the object, and so forth. The signal processor 110 can provide calculated values associated with such computations to a storage 112 and/or to other systems via an interface 106.

The interface 106 can enable the radar MCU 104 to communicate with other systems over local or wide area networks, the internet, automotive communication buses, or other suitable types of wired or wireless communication systems, as non-limiting examples. In some examples, the MCU 104 can provide the calculated values over the interface 106 to other systems, such as a radar-camera-lidar fusion system; an automated driving assistance system including parking, braking, or lane-change assistance features; and so forth. The storage 112 can be used to store instructions for the radar MCU 104, received data from the radar device 102, calculated values from the signal processor 110, and the like. Storage 112 can be any suitable storage medium, such as a volatile or non-volatile memory.

Any one or more of the radar device 102, subparts or functional subunits thereof, or the radar MCU 104, or subparts of functional subunits thereof, can each be implemented as a single integrated circuit (chip), as multiple connected chips, as other hardware or software or firmware, or as various suitable combinations thereof. In some examples the radar device 102 can be embodied as a line-replaceable unit (LRU) or modular component that is designed to be replaced quickly at an operating location; in some examples the radar MCU 104 can be embodied as a line-replaceable unit (LRU) or modular component that is designed to be replaced quickly at an operating location.

The radar control 108 of the radar MCU 104 includes, for each radar transmitter Tx(i), a corresponding code generator 202. The M code generators 202 can be of any suitable type or arrangement, and can be structured, connected, or programmed to generate a digital sequence of signal values c(i)[n], of length Lc, of any suitable type (e.g., Gold, PN, ZCZ, or other). After digital-to-analog conversion by DACs 204 of each digital sequence of signal values c(i)[n], the code sequences are used at the mixers 205 to modulate a radar carrier signal originating from the local oscillator 201. After suitable signal conditioning (e.g., by a corresponding low-pass filter (LPF) 206 and power amplifier (PA) 208 in each transmitter module 118 in the example shown; other suitable compositions or arrangements of the transmitter modules 118 can be employed), the resulting M modulated radar signals are applied to the M radar transmitters Tx(i). Those radar transmitters Tx(i) (also referred to as transmitters or transmit antennas or transmitting antenna elements) can be of any suitable type or arrangement. Each radar transmitter Tx(i) in turn produces the corresponding radar output signal, at the radar frequency of the local oscillator 201 and modulated by the corresponding code sequence. The radar device 102 is arranged so that the M radar transmitters Tx(i) transmit simultaneously the M corresponding radar output signals, which should exhibit sufficient coherence with one another, or sufficiently small frequency offsets from one another, to enable the signal processing operations described hereinafter.

The N radar receivers Rx(j) (also referred to as receivers or receive antennas or receiving antenna elements) can be of any suitable type or arrangement. Each of the N radar receivers Rx(j) receives radar return signals, which can include portions of the M radar output signals back-reflected by an object 99, and delivers those signals to the corresponding RF receive module 128. In the example shown, each RF receive module 128 includes a corresponding low-noise amplifier (LNA) 212, mixer 214 (connected to the local oscillator 201), and low-pass filter (LPF) 216; other suitable compositions or arrangements of the RF receive modules 128 can be employed. After reception, amplification, demodulating, and filtering of each received radar signal, a corresponding analog-to-digital converter (ADC) 218 generates the corresponding digital sequence of signal values x(j)[n], of length Lc, that represents the radar signals received by the corresponding radar receiver Rx(j). The digital sequences of signal values x(j)[n] are delivered to the signal processor 110 of the radar MCU 104, as are the digital sequences of signal values c(i)[n] from the radar controller 108.

The radar controller 108 of the radar MCU 104 can be of any suitable type or arrangement; similarly, the signal processor 110 of the radar MCU 104 can be of any suitable type or arrangement. In the example shown, the signal processor 110 includes submodules or subcomponents for (i) a fast-time fast Fourier transform (FFT) correlator 320, (ii) a slow-time discrete Fourier transform (DFT) module 324, and (iii) an angle processing module 228. The signal processor 110 can include any suitable combination of those or other components or modules, e.g., range-Doppler mapping, NCI/CFAR/peak search, out-of-field-of view (out-of-FOV) detection, multipath detection, or other suitable components or modules. In some examples the radar MCU 104 can be operatively coupled to a storage unit 112 or an interface unit 106.

The internal arrangements of each of the RF transmitter modules 118 and RF receiver modules 128 that are shown and described above are only examples; any suitable internal arrangements of the RF transmitter modules 118 or the RF receiver modules 128 can be employed. Likewise, the specific internal arrangement of the radar MCU 104 shown in Fig. 1 is only an example; any suitable internal arrangement of the radar MCU 104 can be employed. Note that the term "radar control circuitry" as employed herein shall denote collectively the radar MCU 104 and all of its constituent parts, the RF transmitter modules 118 and all of their constituent parts, the RF receiver modules 128 and all of their constituent parts, as well as any additional components of the radar device 102 (e.g., one or more RF oscillators, code generators, and so forth).

As used herein the terms "circuit," "circuitry,", "processor," "controller" or "microcontroller," "MCU," "modules," and related terminology mean any suitable combination(s) of analog or digital circuit elements, hardware, firmware, software, and the like, including but not limited to, application-specific integrated circuits (ASICs), field programmable gate arrays (FPGAs), microcontrollers, and microprocessors. It will be understood that those terms encompass nonvolatile and volatile memory devices, including but not limited to random access memory (RAM), read-only memory (ROM), and the like, which can be implemented using any suitable devices, such as SRAM, DRAM, or magnetic storage devices as non-limiting examples. Along these lines it will be understood that references to those terms can include devices in which general purpose computing devices includes or is otherwise coupled to memory which stores machine-readable instructions configured to cause the described actions to be performed. Such instructions can be stored as instructions in a high-level programming language that are interpreted or compiled into object code or machine language, or they can be stored directly as object code or another suitable representation, as nonlimiting examples.

In the processing in a digital radar system arranged as described above, each digital sequence of signal values c(i)[n] (one corresponding to each transmitter Tx(i)) is correlated with each sequence of signal values x(j)[n] (one from each radar receiver Rx(j)), for a total of MxN correlations, each of length Lc. In some examples, the signal values c(i)[n] can be filtered (described further below) to yield corresponding sequences of signal values b(i)[n], which are then correlated with the sequences x(j)[n] to yield the desired correlations. In the remainder of the disclosure, any sequence c(i)[n] will be understood to be replaceable by the corresponding filtered sequence b(i)[n] if needed or desired. A correlation can be computed in the time domain as

$$r[\tau] = \sum_{n=0}^{Lc-1} x[n]c\left[(n-\tau)mod \cdot Lc)\right]$$, with

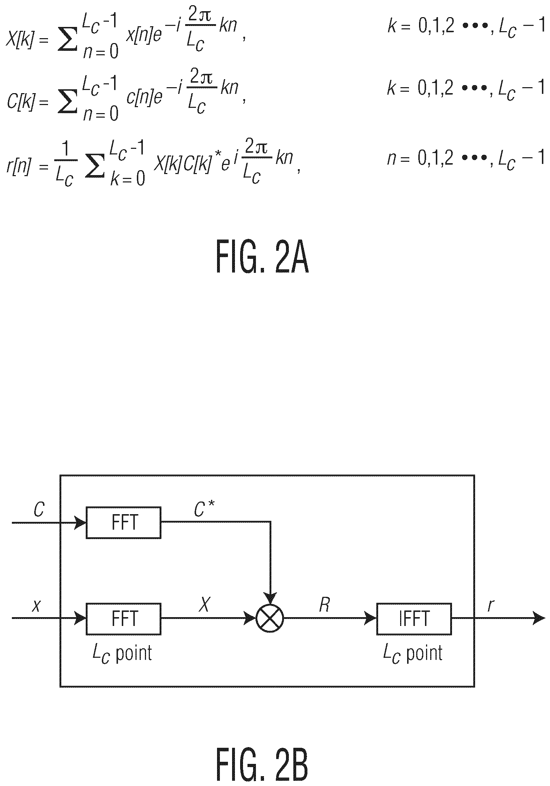

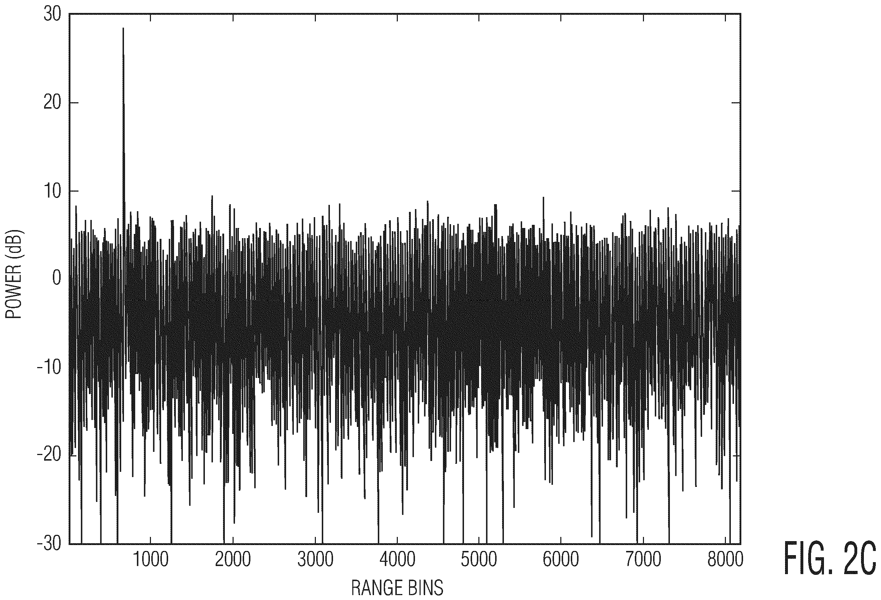

a computational complexity $O(Lc^2)$. To improve computational efficiency, the correlation can instead be calculated in the frequency domain, as illustrated mathematically in Fig. 2A and schematically in Fig. 2B. Such a frequency-domain correlator can employ fast Fourier transforms (FFTs) of each of the sequences x(j)[n] and c(i)[n] (or b(i)[n]), respectively, to generate corresponding DFTs and X(j)[k] and C(i)[k] (or B(i)[k]), which are then multiplied together to yield the sequence R(ij)[k]. An IFFT of R(ij)[k] yields a sequence of signal values r(ij)[n] of the correlation for each of MxN pairs of radar transmitter Tx(i) and radar receiver Rx(j). An example of such a correlation r[n] with Lc = 8192 is shown in Fig. 2C, in which a single object appears to have been detected. Hereinafter the labels "i" and "j" designating a particular radar transmitter Tx(i) and radar receiver Rx(j), respectively, will be suppressed for clarity. The digital sequences of signal values c[n] (or b[n]), x[n], r[n], C[k] (or B[k]), X[k], R[k], and so forth will be understood to represent any one of M, N, or MxN such sequences for the M radar transmitters Tx(i), the N radar receivers Rx(j), and MxN different pairings thereof.

As noted above, in one or more examples the sequence of signal values c[n] may be filtered to produce a corresponding filtered sequence of signal values b[n], which may be a different sequence of signal values of same length Lc (compared to c[n]). In one or more examples, the filter used to produce the filtered sequence of signal values b[n] may be a mismatched filter (MMF) designed using MMF design algorithms. Such a MMF can be designed to reduce sidelobe levels introduced by Doppler shifts, with minimal loss in signal-to-noise ratio (SNR). For instance, the filtered sequence b[n] could be derived by solving an optimization problem that aims to minimize the integrated sidelobe level within a specific zone, while keeping the SNR loss within a constrained limit. The optimization goal and constraints used in generating the filtered sequence b[n] in one or more such embodiments can be adjusted depending on the specific radar application, and the choice of solvers is also flexible. In one or more such embodiments, the filter sequence b[n] has the same length Lc as the received sequence x[n]. In one or more such embodiments, the filtered sequence b[n] may be provided (e.g., instead of c[n]) along with the received sequence x[n] as inputs to the correlator 320. In the remainder of the disclosure, any occurrence of a sequence of signal values c[n] can be replaced with a corresponding sequence of signal values b[n] if needed or desired. In one or more examples, one or more optional filters 420, such as a mismatched filter (MMF), can be interposed between the code generators 202 and the correlators 320.

The use of digital encoding enables the digital radar system to distinguish between back-reflected radar signals received at a given radar receiver that originated from different radar transmitters. Longer code sequences c[n] and x[n] enable greater maximum detection range, or better velocity resolution for detected object. However, the computational complexity of the FFT-based correlation of sequences of length Lc increases on the order of $O(Lc \cdot \log Lc)$. The computational burden, memory usage, or power consumption of computing MxN correlations of length Lc can become impractical or unworkable as Lc increases.

Embodiments herein address these challenges by providing a digital radar system in which the advantages of using MxN FFT correlations (or DFTs) using longer sequences of Lc signal values are retained while reducing the computational complexity, memory usage, or power consumption of performing those correlations (or DFTs).

For example, the present disclosure includes systems and methods in which the sequences of signal values c[n] and x[n] are divided into d blocks of length Lc/d, a first quantity of one or more of those d blocks is identified as including one or more candidate object detections, and at least some subsequent processing or computations (e.g., correlations or DFTs) use only the signal values of the identified quantity of blocks. By limiting subsequent processing or computations to only those identified block(s), processing or computation speed can be increased, memory usage can be reduced, power consumption can be reduced, and/or the complexity of other computations can be reduced. Moreover, in many practical instances (e.g., in an automotive radar) the number of objects detected is relatively sparce compared to the number of signal values Lc, indicating that reliable range and velocity estimates could still be obtained while leaving out signal values from non-identified blocks. One or more embodiments of the processing methods disclosed herein are adaptive in that the quantity of blocks (e.g., which blocks, or how many blocks) that are used for subsequent processing or computations can change depending on changing location or range of candidate detections, based on range estimates from other measurement sources (e.g., a LIDAR system), or based on data from a digital map or other external data source.

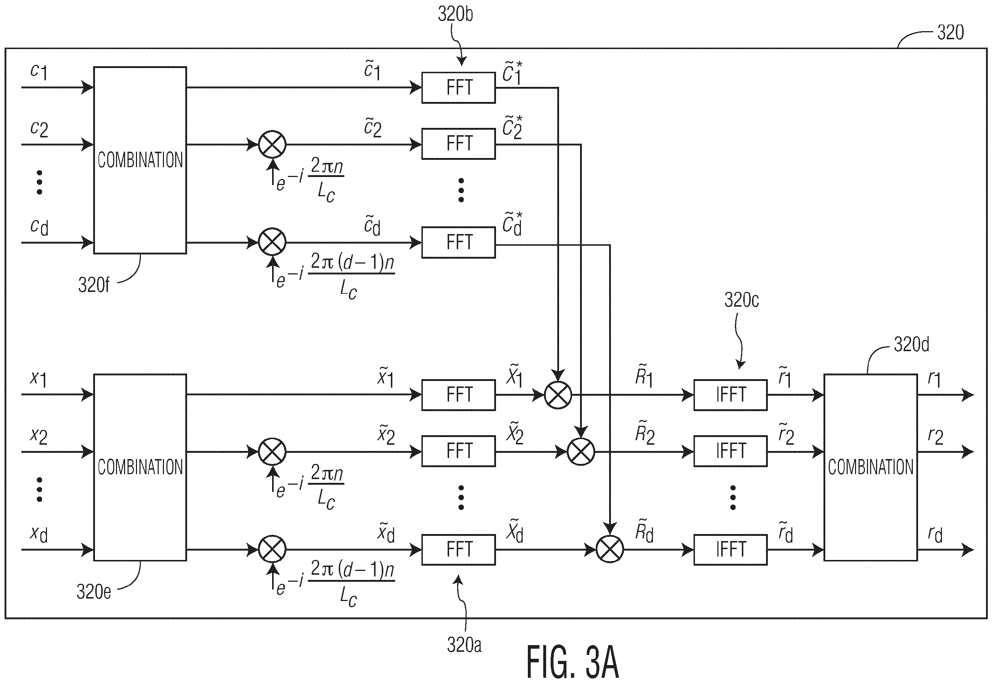

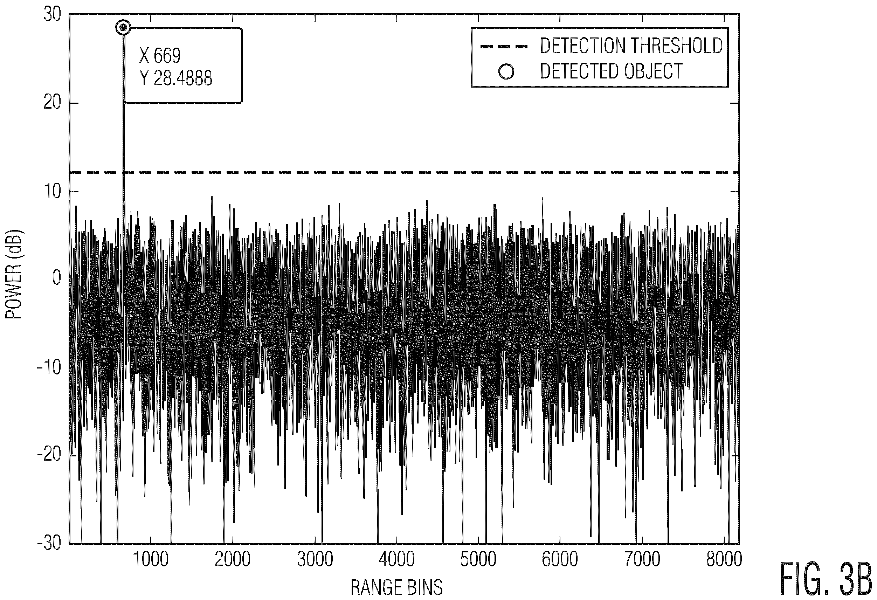

In the correlator 320 of the example digital radar apparatus 300 of Fig. 1, the incoming sequences of Lc signal values x[n] and c[n] are divided into d blocks of length Lc/d (i.e., blocks $x_1[n]...x_d[n]$ and $c_1[n]...c_d[n]$). Each of those blocks is input to a corresponding FFT processor 320a (for the blocks of x[n]) or 320b (for the blocks of c[n]) to produce corresponding blocks of $\tilde{X}[k]$ and C[k] (i.e., blocks $\tilde{X}_1[k]...\tilde{X}_d[k]$ and $\tilde{C}_1[k]...\tilde{C}_d[k]$). Corresponding pairs of those blocks are multiplied to yield d corresponding blocks of $\tilde{R}[k]$ (i.e., blocks $\tilde{R}_1[k]...\tilde{R}_d[k]$). The d blocks of $\tilde{R}[k]$, each of length Lc/d, are input to corresponding IFFT processors 320c to produce d corresponding blocks of the correlation $\tilde{r}[n]$ (i.e., blocks $\tilde{r}_1[n]... \tilde{r}_d[n]$), each block being of length Lc/d. For an initial range estimate, the d blocks of $\tilde{r}[n]$ can be recombined (i.e., concatenated) to form the complete correlation r[n] of length Lc (e.g., as in Figs. 3A and 3B). While the present example describes x[n] and c[n] as inputs to the correlator 320, it should be understood that this is illustrative and non-limiting. For example, a filtered sequence of Lc signal values b[n] may be provided as an input to the correlator 320 instead of the signal values c[n], where the sequence of Lc signal values b[n] is produced by filtering the sequence of Lc signal values c[n] using the filter 420 (e.g., an MMF filter, as a non-limiting example).

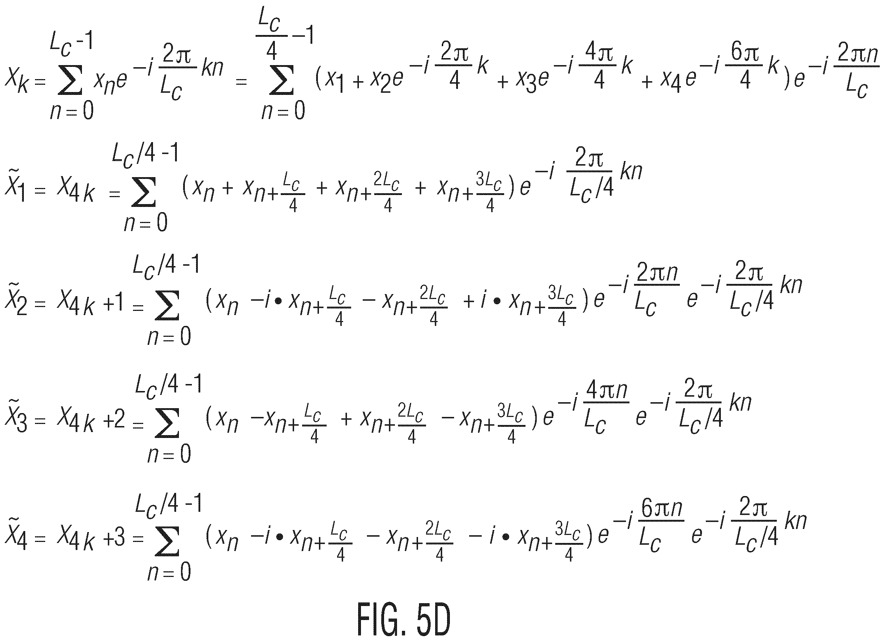

The combination processors 320e and 320f that precede the FFT processors 320a and 320b, respectively, aggregate the contributions of the corresponding signal blocks with corresponding phase shifts that align them in the frequency domain to ensure proper reconstruction of the full length FFT, analogous to combining weighted real and imaginary contributions of each block. The detailed mathematical expression for the action of the processors 320a and 320e is shown in Fig. 5D; the expression for the action of the processors 320b and 320f would be analogous. In one example, to generate $\tilde{x}1$, the combination processor part sums the 4 blocks together without any added phase shifts; while to generate $\tilde{x}2$, the weighted factors for the 4 blocks are 1, -i, -1, and i, respectively (where $i^2=-1$).

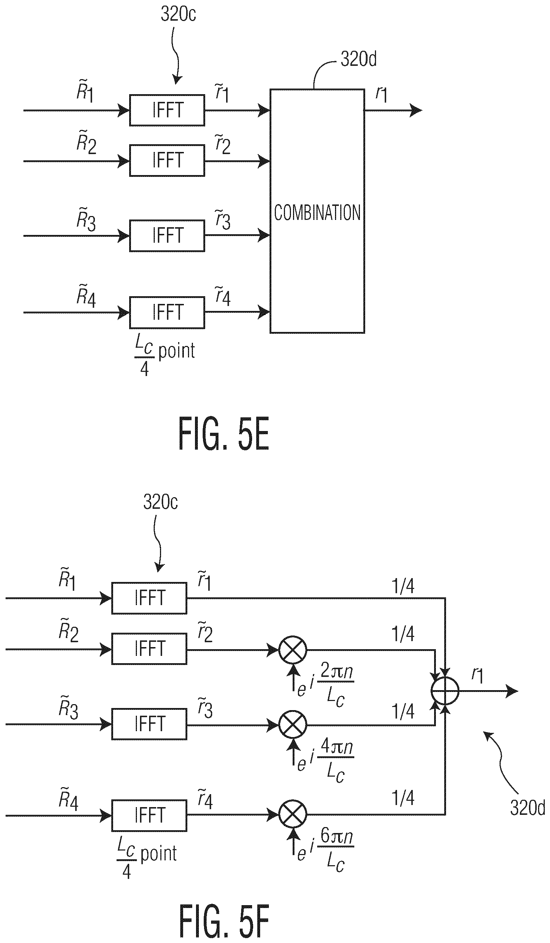

The combination processors 320d (shown generically in Fig. 5E; shown as a specific example in Fig. 5F) that follow the IFFT processors 320c reconstruct the original segmented correlation result by summing the frequency-adjusted contributions from all the blocks, exploiting phase corrections and the orthogonality of exponential terms to isolate and align the desired block. The corresponding detailed mathematical explanation is shown in Fig 5F. For example, to reconstruct the first block correlation result r1 [n], the combination processor 320d sums and phase aligns the contributions from the four segments ($\tilde{r}1, \tilde{r}2, \tilde{r}3, \tilde{r}4$) and then normalizes by ¼.

A candidate object detection can be identified in the correlation r[n] in any suitable way, such as by threshold detection (e.g., CFAR or other noise-power-dependent technique). Once a candidate object detection is identified (e.g., at channel 669 in the examples shown in Fig. 3B), one or more of the d blocks can be identified for use in further processing. In the example of Fig. 3B the first block $r_1[n]$ of d=4 blocks is identified as including the candidate object detection.

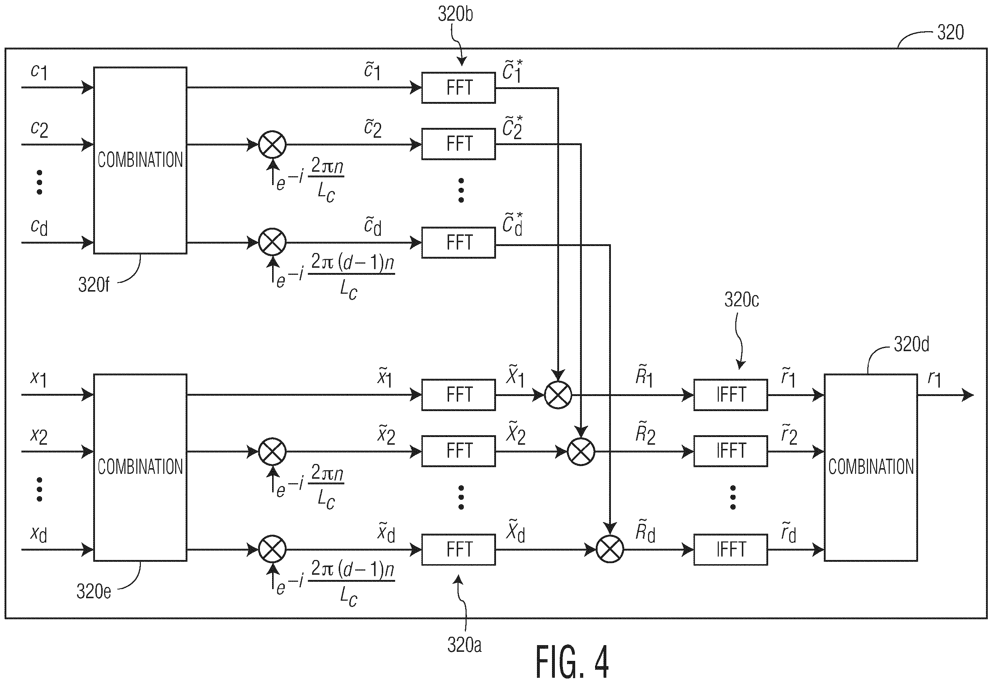

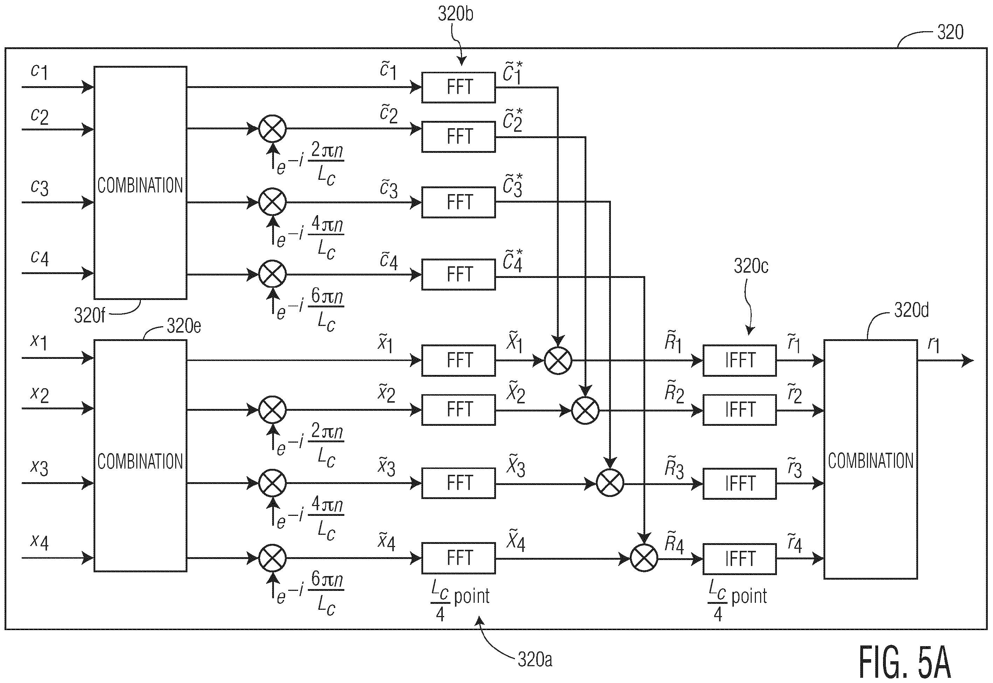

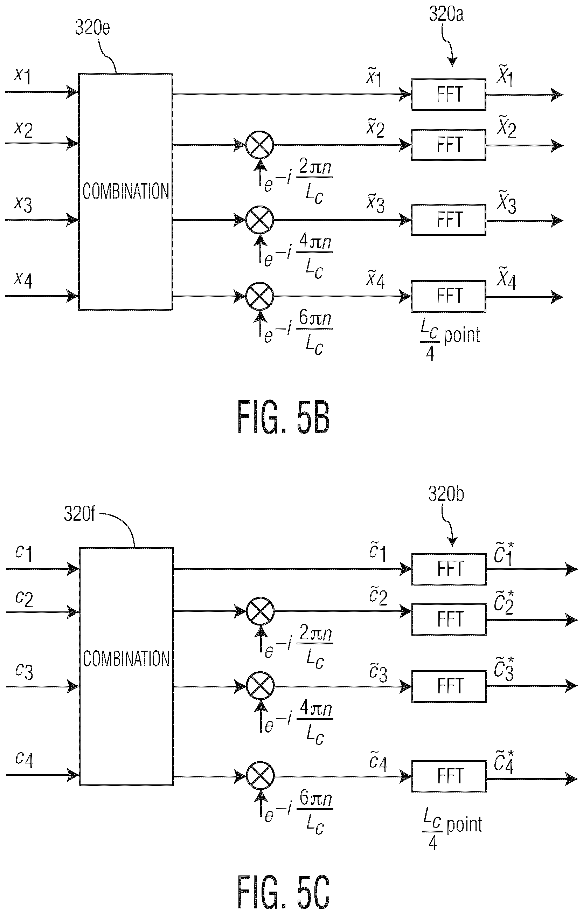

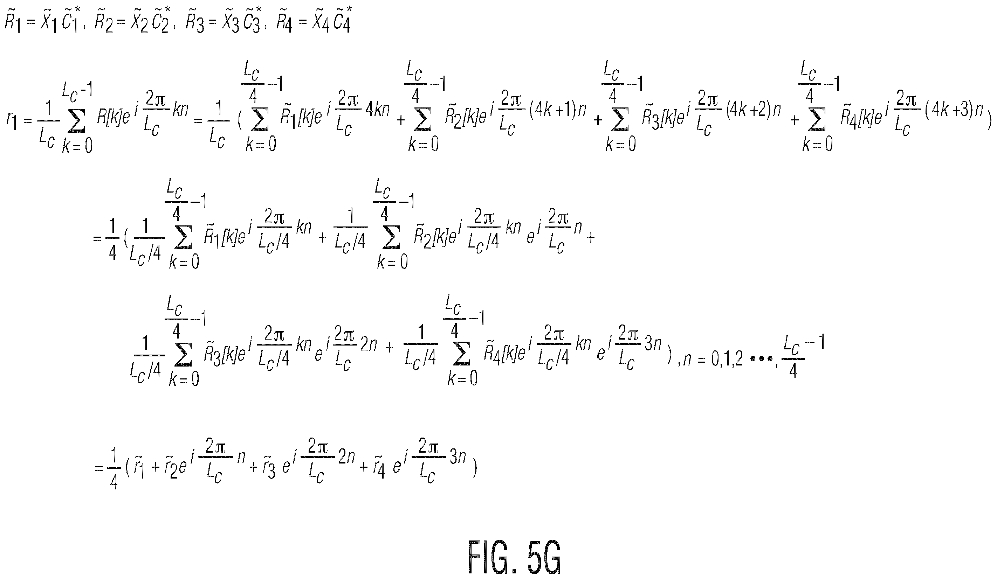

After the quantity of blocks is identified, computational resources can be concentrated on the signal values of only those blocks. Such focused operation of the correlator 320 is illustrated schematically in Figs. 4 (for any value of d) and 5A-5F (for a specific example in which d=4). Figs. 4 and 5A each illustrate the overall arrangement of the correlator 320. Figs. 5B depicts the combination processor 320e and the FFT processors 320a; 5C depicts the combination processor 320f and the FFT processors 320b. Fig. 5D shows a mathematical representation of the FFT processes performed on the blocks $\tilde{x}_i[n]$ by the combination processor 320e and the FFT processors 320a; the combination processor 320f and the FFT processors 320b would operate analogously on the blocks $\tilde{c}_i[n]$. Fig. 5E depicts the IFFT modules 320c and the switch/combiner 320d; 5F depicts the IFFT modules 320c showing additional details of the switch/combiner 320d. Fig. 5G shows a mathematical representation of the IFFT processes performed on the blocks $\tilde{R}_i[k]$ by the IFFT processors 320c. The switch/combiner 320d can be operated to combine the blocks $\tilde{r}_i[n]$ to form the complete correlation r[n], or instead can be operated to select only those blocks $r_i[n]$ that correspond to candidate object detections as described above.

In some examples, all of the blocks $r_1[n]...r_d[n]$ can be computed, but at 320d, instead of reassembling the entire correlation r[n] as described above, only the identified block(s) are passed along for the next stage of processing (e.g., to the slow-time DFT 324 in the Example of Fig. 1). By only passing along some of the signal values r[n] (e.g., the first block $r_1[n]$ in the examples shown), any subsequent processing steps are reduced in complexity, computational intensity, memory usage, or power consumption.

In some other examples, even further reductions can be achieved. Once one or more blocks of signal values are identified as including a candidate object detection, portions of the combination processor 320d that correspond to non-identified blocks can be deactivated. In other words, if for example only the first block is identified as including a candidate object detection, then there is no need to continue performing combinations at 320d on blocks $r_2[n]...r_d[n]$.

Radar apparatus, and automotive radars in particular, are used to monitor a dynamic environment. Objects enter the radar's field of view, move, change velocity, and move out of the radar's field of view. Those evolutions can arise from movement of the objects or by movement of the radar apparatus. The radar apparatus 300 is structured, connected, or programmed to adapt to the changing environment of detected objects.

As described above, certain blocks of the sequences of signal values r[n] are identified as corresponding to a candidate object detection, and subsequent steps described above are based on that identification. In some examples, the identification is based on generating the full-length correlation r[n] of length Lc. In some of those examples the correlator 320 can be operated as shown in Figs. 3A and 3B, combining the blocks $\tilde{r}_i[n]$ to form the complete correlation r[n]. Once the relevant blocks $\tilde{r}_i[n]$ are identified, the other blocks of that complete correlation can be discarded without further processing. For some immediately subsequent period of time as the radar apparatus continues to interrogate its environment and receives subsequent sequences of values x[n] and c[n], the non-identified blocks $\tilde{r}_i[n]$ can be discarded. Only the blocks $r_i[n]$ identified based on the candidate object detection are passed along for further processing, and in some instances those can be the only blocks $r_i[n]$ that are produced at all.

The radar apparatus 300 can be structured, connected, or programmed to look for candidate object detections and correspondingly adapt according to which blocks are the identified blocks. After each such "block reset" or "block refresh", as it were, processing of subsequent signal value sequences x[n] and c[n] can be performed based one those blocks identified in the most recent reset. Such block resets can be triggered in any suitable way. In some examples the block reset can be performed automatically at regular intervals, e.g., N times per second, or after every N repetition cycles of the radar apparatus. In some examples the processed signals can provide the trigger to reset, e.g., if the candidate object detection disappears from, or if a new candidate object detection appears in, the currently identified blocks.

Consider a specific example exhibiting the adaptability of the radar apparatus 300. An object might be initially detected (using the full correlation r[n] of length Lc) with an estimated range that places it in the first block among d=4 blocks (e.g., as in the example of Figs. 5A-5G). After the initial full correlation, only the first block of subsequent sequences of signal values are processed to yield the block $r_1[n]$ of length Lc/4, which is used to estimate the range to the object and for further processing (e.g., slow time DFT for velocity estimation, or angle processing for position estimation). That state of affairs might continue through one or more block resets, until evolution of the environment around the radar apparatus 300 has evolved sufficiently so that the next block reset shows no object detection in the first block $r_1[n]$, but now shows an object detection in the second block $r_2[n]$. From that point processing switches to the second block of subsequently received signal values to produce the block $r_2[n]$, which is used for range estimation and further processing. The radar apparatus 300 continues to use the second block $r_2[n]$ until a block reset occurs that necessitates another block shift. Such ongoing adaptation can continue as long as the radar apparatus 300 operates.

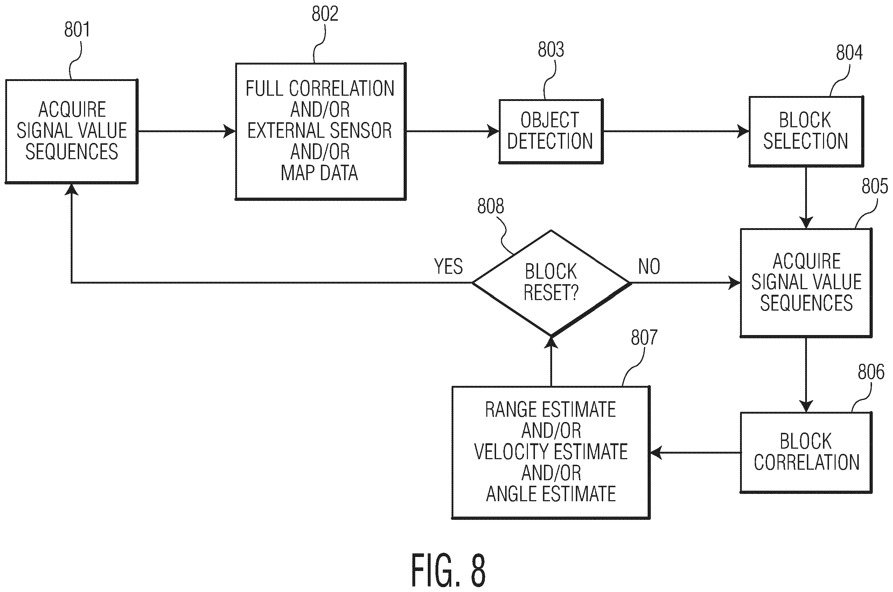

The adaptive operation of the radar apparatus 300 described above is illustrated schematically in the flowchart of Fig. 8. At 801 the signal values x[n] and c[n] are acquired. At 802 a full-length correlation can be performed (e.g., as in Figs. 3A and 3B), or a range estimate can be obtained from an external sensor, or data can be received from a digital map. One or more candidate object detections are identified at 803, and based on those object detections one or more corresponding blocks are selected at 804. Subsequent sequences of signal values x[n] and c[n] are received at 805, and only the one or more selected blocks of the correlation r[n] are generated or passed along at 806. Range estimate(s), velocity estimate(s), angle estimate(s), or other measurements can be made at 807 based on the selected blocks of the correlation. At 808 a determination is made whether a block reset is to be performed, based on any one or more suitable criteria, including those described above). If no block reset is to be performed, the sequence of 805, 806, and 807 can be repeated, operating on only the selected block(s), with subsequent sequences of signal values x[n] and c[n]. If a block reset is due at 808, then operation returns to 801, and the process begins anew to determine which one or more blocks are selected for subsequent processing. The overall process can repeat as long as new signal sequences are received.

As already noted, the complete correlation r[n] of length Lc can be used to identify candidate objects and to identify the corresponding blocks. The complete correlation r[n] can be repeated for each block reset. After each block reset only those blocks corresponding to candidate object detections are processed until the next block reset. In other words, the radar apparatus 300 uses its own internally generated range estimate to implement the adaptive processing disclosed herein.

In some examples, blocks can be identified based on an object detection from one or more sensors external to the radar apparatus, e.g., a range estimate from a LIDAR system in communication with the radar apparatus 300. Candidate object detections from such external sensors can be employed to identify the relevant blocks, initially or for a block reset. That block identification can be employed as described above, and subsequent object detections from the outside sensor can be employed to adapt the identification of relevant blocks, as described above.

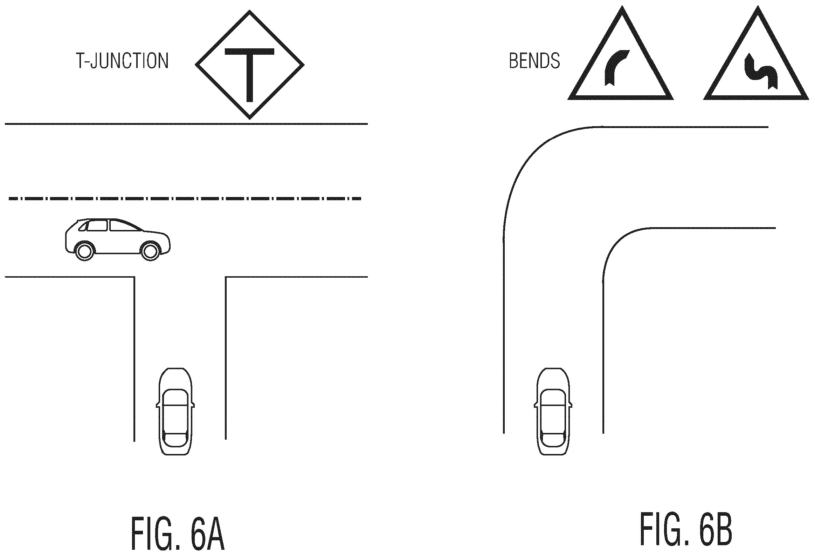

In some examples, data from an external source can be employed for identifying the relevant blocks. For example, digital map data can be employed for ruling out certain blocks of the correlation r[n]. In the examples of Figs. 6A and 6B, certain upcoming curves, bends, or intersections on a road might render certain blocks of r[n] irrelevant, e.g., those blocks representing positions beyond the intersection or bend, and so off of the road. The radar apparatus 300 can include, or be operative coupled to, a digital map, and structured, connected, or arranged to rule out or rule in certain blocks of the correlation r[n] based on the map data and the corresponding position and velocity of the radar apparatus 300 relative to the area depicted by the map. As with block identifications described above based on internally or externally generated range estimates, block identifications based on map data can be repeated periodically or as needed to implement a block reset as described above. Other suitable external data sources can be employed.

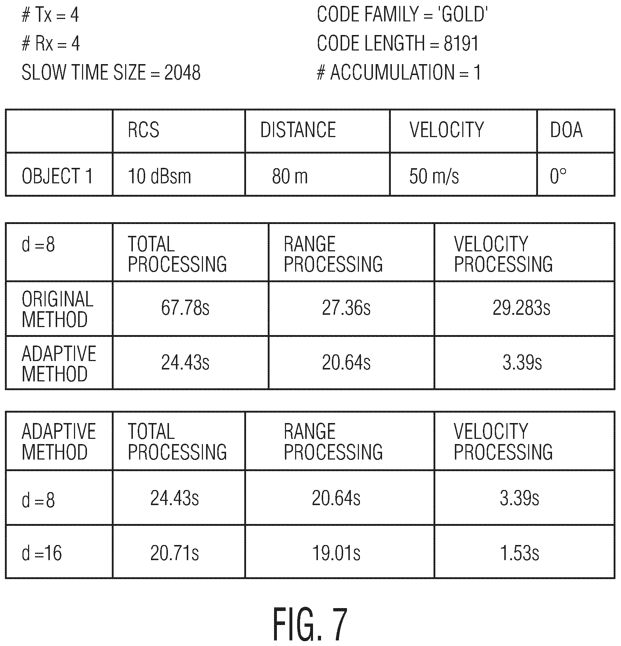

Simulated test data are shown in Fig. 7 for a 4-transmitter, 4-receiver MIMO radar apparatus using a "Gold" code of length 8191 digital values. The fist comparison is between a conventional processing method (i.e., in which the entire correlation r[n] is generated for every sequence of signal values, used to estimate range, and passed along for further processing to estimate velocity) versus the disclosed adaptive method in which d=8 (in which relevant blocks are identified and only those identified blocks $r_i[n]$ of the correlation are used to estimate range and passed along to estimate velocity). The data indicate nearly 70% reduction in processing time for the adaptive method versus the conventional method. Much of the reduction in processing time arises from the velocity processing step, which in the adaptive method only operates on those blocks $r_i[n]$ of the correlation that were identified as corresponding to a candidate object detection. A lesser degree of reduction arises from range processing. In the second comparison, two adaptive methods were compared, with d=8 and d=16. The processing time required for velocity processing appears to vary roughly inversely with d. Importantly, the range and velocity estimates were the same for all methods, and there was no observed decrease in signal-to-noise ratio (SNR). Disregarding or not generating the non-relevant blocks of the correlation r[n] appeared to have no significant effect on the overall performance of the radar apparatus 300.

As noted above, much of the reduction in processing time in the adaptive method appears to result from the smaller blocks $r_i[n]$ that are passed along to the slow-time DFT module 324. In some examples the DFT module 324 can be arranged in a conventional manner (i.e., performing a full-length discrete Fourier transform along a slow-time axis), and used in combination with the adaptive correlator 324. In such examples, all signal values $r_i[n]$ are used to generate a Z x Lr matrix wherein Lr = Lc/d represents the length of the blocks $r_i[n]$ and Z represents the size of the slow-time dimension. Alternatively, an adaptive, reduced-size-block processing method, similar to that described above for the correlator 320, can be employed in the DFT module 324, in combination with the adaptive correlator 324, or in combination with a correlator operated in a conventional manner (i.e., producing only full-length correlations r[n] of length Lc). In such examples the DFT module 324 would generate a Z/d' x Lr matrix where d' is an integer and Lr = Lc (if a conventional correlator is employed) or Lr = Lc/d (if an adaptive correlator 324 is employed). Note that d and d' can be, but need not be, the same integer. An adaptive DFT module 324 can be arranged in a manner similar to, e.g., the FFT modules depicted in Figs. 5B or 5C. Use and adaptation of the adaptive DFT module 324 would proceed in a manner analogous to that described above for the adaptive correlator 320. For example, a full-length DFT could be performed to identify relevant blocks of the correlation sequence r[n] or $r_i$[n], subsequent DFTs could be performed only on the identified blocks, and periodic resets to determine of the relevant blocks had changed could be performed to enable adaptation of the DFT module 324. The resets can be based on subsequent full DFTs, range or velocity estimates from external sensors (e.g., as LIDAR system), or from digital map data or other suitable external data source (e.g., local speed limit).

The adaptive methods described above could be applied to other sequences of signal values besides those originating from a radar apparatus, particularly when detected "events" or "objects" (loosely construed) are sparsely distributed within the received signals. A general signal-processing apparatus can include control circuitry including at least a first DFT processor and first electronic signal source(s) operably coupled to the control circuitry. Sequences of signal values s1[n] having length Lc represent first electronic signals received from the first signal source(s), and the first DFT processor generates a corresponding discrete Fourier transform S1[k]. A candidate "detection" of any suitable type can be used to identify a first quantity of blocks of signal values S1[k]. Each block is of length Lc/d' where d' is an integer. Each identified block includes at least one candidate detection, based on data or signal values indicative of a level of sparsity of candidate detections within the sequence of signal values s1[n]. The "detections" can be based on a previous full-length DFT of s1[n], on an estimate received from additional circuitry external to the signal-processing apparatus, or on data received from an external source that includes data that represents parameters characterizing the signal-processing apparatus. Analogous to the methods disclosed above, the DFT in the general signal-processing can be made adaptive by periodically "resetting" the selected blocks, based on updated candidate "detections".

In some examples the general signal-processing apparatus can further include (i) a second DFT processor and an IFFT processor in the control circuitry and (ii) second electronic signal source(s) operably coupled to the control circuitry. Sequences of signal values s2[n] having length Lc represent first electronic signals received from the second signal source(s), and the second DFT processor generates a corresponding discrete Fourier transform S2[k]. Blocks of signal values S2[k] have length Lc/d' and correspond to blocks of the signal values S1[k]. The control circuity generates the product of S1[k] and S2[k], and the IFFT processor generates an inverse Fourier transform r[n] of the product of S1[k] and S2[k]. The sequence of values r[n] is a correlation of the sequences of signal values s1[n] and s2[n]. In some examples only selected blocks of r[n] are generated from corresponding blocks of s1[n] and s2[n]; in some examples the full-length correlation r[n] is generated, and only selected blocks a processed in subsequent processing steps. Analogous to the methods disclosed above, the correlation in the general signal-processing can be made adaptive by periodically "resetting" the selected blocks, based on updated candidate "detections".

Although the operations of the method(s) herein are shown and described in a particular order, the order of the operations of each method may be altered so that certain operations may be performed in an inverse order or so that certain operations may be performed, at least in part, concurrently with other operations. In some examples, instructions or sub-operations of distinct operations may be implemented in an intermittent and/or alternating manner.

It should also be noted that at least some of the operations for the method(s) described herein may be implemented using software instructions stored on a computer useable storage medium for execution by a computer. As an example, an embodiment of a computer program product includes a computer useable storage medium to store a computer readable program. The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk.

Alternatively, embodiments herein may be implemented entirely in hardware or in an implementation containing both hardware and software elements. In embodiments which use software, the software may include but is not limited to firmware, resident software, microcode, or other suitable software.

As used herein the terms "circuit" and "circuitry," including the term "processing circuitry" and related terminology means any suitable combination(s) of analog or digital circuit elements, hardware, firmware, software, and the like; including but not limited to, application-specific integrated circuits (ASICs), field programmable gate arrays (FPGAs), microcontrollers, and microprocessors. It will be understood that the term "circuitry" encompasses nonvolatile and volatile memory devices including, but not limited to random access memory (RAM), read-only memory (ROM), and the like, which can be implemented using any suitable devices, such as SRAM, DRAM, or magnetic storage devices as non-limiting examples. Along these lines it will be understood that references to a "processor" or "processing circuitry" can include devices in which general purpose computing devices includes or is otherwise coupled to memory which stores machine-readable instructions configured to cause the processing circuitry to perform the described actions. Such instructions can be stored as instructions in a high level programming language that is readable by human beings which are that are interpreted or compiled into object code or machine language, or they may be stored directly in a low-level language such as object code or machine language or another suitable representation, as nonlimiting examples.

It will be further understood that, unless explicitly stated otherwise, that features such as processing circuitry, memory, and related circuitry and devices can be implemented by any suitable combinations of one or more localized devices including, but not limiting to distributed systems formed by multiple distinct devices in communication with each other via direct electrical communication connections, wireless communication connections, and via public or private communication networks including the Internet. It will further be understood processing circuitry and related devices may be implemented by one or more physical machines or by virtual machines including, but not limited to, virtualized computing environments provided within a "cloud" computing environment or other virtualization systems.

In addition to the preceding, the following example embodiments fall within the scope of the present disclosure or appended claims. Any given Example below that refers to multiple preceding Examples shall be understood to refer to only those preceding Examples with which the given Example is not inconsistent, and to exclude implicitly those preceding Examples with which the given Example is inconsistent.

Example 1. A radar apparatus comprising: (a) radar control circuitry including at least a correlator; (b) a set of one or more radar transmitters operably coupled to the radar control circuitry; and (c) a set of one or more radar receivers operably coupled to the radar control circuitry, wherein the correlator is structured, connected, or programmed to: (d) receive from each radar transmitter corresponding first sequences of signal values having length Lc; (e) receive from each radar receiver corresponding second sequences of signal values having length Lc that represent radar signals received by that radar receiver, wherein the received radar signals include at least one reflected radar signal corresponding to a reflection of at least one radar signal transmitted by the set of radar transmitters; and (f) generate a first quantity of blocks of signal values r[n] of a correlation, each block of the first quantity being of length Lc/d where d is an integer, from corresponding blocks of the first and second sequences of signal values, wherein each block of the first quantity of blocks includes at least one candidate object detection, the first quantity of blocks being selected based on one or more of (i) a sequence of signal values having length Lc of a correlation previously generated by the correlator from previous first and second sequences of Lc signal values, (ii) a range estimate, for at least one detected object, received from one or more sensors external to the radar apparatus, or (iii) data received from a digital map that includes a current location of the radar apparatus.

Example 2. The radar apparatus of Example 1 wherein each corresponding first sequence of signal values is a code sequence used to modulate the radar signal transmitted by the corresponding radar transmitter.

Example 3. The radar apparatus of Example 1 wherein each corresponding first sequence of signal values is a filtered code sequence generated by filtering a code sequence used to modulate the radar signal transmitted by the corresponding radar transmitter.

Example 4. The radar apparatus of any one of Examples 1 through 3 wherein the radar control circuitry is structured, connected, or programmed to generate, based at least in part on the first quantity of blocks of the signal values r[n] generated by the correlator, corresponding estimated range for each of one or more detected objects.

Example 5. The radar apparatus of any one of Examples 1 through 4 wherein the correlator is structured, connected, or programmed to generate a second quantity of blocks of length Lc/d of signal values r[n], different from the first quantity of blocks, from corresponding blocks of subsequent first and second sequences of Lc signal values, different from the first and second sequences, wherein each block of the second quantity of blocks includes at least one candidate object detection, the second quantity of blocks being selected based on one or more of (i) a different sequence of signal values having length Lc of a different correlation previously generated by the correlator from different previous first and second sequences of Lc signal values, (ii) a different range estimate, for at least one detected object, received from the one or more sensors external to the radar apparatus, or (iii) different data received from the digital map that includes a different current location of the radar apparatus.

Example 6. The radar apparatus of Example 5 wherein the radar control circuitry is structured, connected, or programmed to generate, based at least in part on the second quantity of blocks of the signal values r[n] generated by the correlator, corresponding estimated range for each of one or more detected objects.

Example 7. The radar apparatus of any one of Examples 1 through 6 wherein the correlator is structured, connected, or programmed as a fast-time FFT correlator.

Example 8. The radar apparatus of any one of Examples 1 through 7 further comprising a slow-time DFT processor structured, connected, or programmed to generate an estimated speed, velocity, or radial velocity of one or more detected objects based on the first quantity of blocks of the signal values r[n] generated by and received from the correlator.

Example 9. The radar apparatus of Example 8 wherein the DFT processor is structured, connected, or programmed to: (g) receive from the correlator the first quantity of blocks of signal values r[n] generated by the correlator; and (h) generate a first quantity of blocks of signal values T[k] of a discrete Fourier transform, each block of the first quantity being of length Z/d' where d' is an integer and Z is size of a slow time dimension, from corresponding blocks of the first sequence of the signal values r[n], wherein each block of the first quantity of blocks of signal values T[k] includes at least one candidate object detection, the first quantity of blocks being selected based on one or more of (i) a velocity estimate, for at least one detected object, based on the first sequence of the signal values r[n], (ii) a velocity estimate, for at least one detected object, received from one or more sensors external to the radar apparatus, or (iii) data received from a digital map that includes a current location of the radar apparatus.

Example 10. The radar apparatus of any one of Examples 1 through 9 wherein the correlator is structured, connected, or programmed so as to generate a sequence of Lc signal values of r[n] from Lc signal values of the first and second sequences of signal values and to exclude from further processing those signal values of r[n] that are not among the first quantity of blocks.

Example 11. The radar apparatus of any one of Examples 1 through 10 wherein the correlator is structured, connected, or programmed so as to generate, before generating the first quantity of blocks of signal values r[n], the previously generated sequence of Lc signal values of the correlation from the first and second previous sequences of Lc signal values.

Example 12. A method employing a radar apparatus, wherein the radar apparatus comprises (i) radar control circuitry including at least a correlator, (ii) a set of one or more radar transmitters operably coupled to the radar control circuitry, and (iii) a set of one or more radar receivers operably coupled to the radar control circuitry, the method comprising: (a) receiving at the radar control circuitry corresponding first sequences of signal values of length Lc from each radar transmitter; (b) receiving at the radar control circuitry corresponding second sequences of signal values of length Lc from each radar receiver; and (c) using the correlator, generating a first quantity of blocks of signal values r[n] of a correlation, each block of the first quantity being of length Lc/d where d is an integer, from the corresponding blocks of the first and second sequences of signal values, wherein each block of the first quantity of blocks includes at least one candidate object detection, the first quantity of blocks being selected based on one or more of (i) a sequence of signal values having length Lc of a correlation previously generated by the correlator from previous first and second sequences of Lc signal values, (ii) a range estimate, for the at least one candidate object detection, received from one or more sensors external to the radar apparatus, or (iii) data received from a digital map that includes a current location of the radar apparatus.

Example 13. The method of Example 12 wherein each corresponding first sequence of signal values is a code sequence used to modulate the radar signal transmitted by the corresponding radar transmitter.

Example 14. The method of Example 12 wherein each corresponding first sequence of signal values is a filtered code sequence generated by filtering a code sequence used to modulate the radar signal transmitted by the corresponding radar transmitter.

Example 15. The method of any one of Examples 12 through 14 further comprising generating, based at least in part on the first quantity of blocks of the signal values r[n] generated by the correlator, corresponding estimated range for each of one or more detected objects.

Example 16. The method of any one of Examples 12 through 15 further comprising: (a') receiving at the radar control circuitry a corresponding subsequent first sequence of signal values of length Lc, different from the first sequence of signal values, from each radar transmitter; (b') receiving at the radar control circuitry a corresponding subsequent second sequence of signal values of length Lc, different from the second sequence of signal values, from each radar receiver; and (c') using the correlator, generating a second quantity of blocks of length Lc/d of signal values r[n], different from the first quantity of blocks, from corresponding blocks of the subsequent first and second sequences of signal values, wherein each block of the second quantity of blocks includes at least one candidate object detection, the second quantity of blocks being selected based on one or more of (i) a different sequence of signal values having length Lc of a different correlation previously generated by the correlator from different previous first and second sequences of Lc signal values, (ii) a different range estimate, for the at least one candidate object detection, received from the one or more sensors external to the radar apparatus, or (iii) different data received from the digital map that includes a different current location of the radar apparatus.

Example 17. The method of Example 16 further comprising generating, based at least in part on the second quantity of blocks of the signal values r[n] generated by the correlator, corresponding estimated range for each of one or more detected objects.

Example 18. The method of any one of Examples 12 through 17 wherein the correlator is structured, connected, or programmed as a fast-time FFT correlator.

Example 19. The method of any one of Examples 12 through 18 wherein the radar control circuitry further comprises a slow-time DFT processor, the method further comprising, using the slow-time DFT processor, generating an estimated speed, velocity, or radial velocity of one or more detected objects based on the first quantity of blocks of the signal values r[n] generated by and received from the correlator.

Example 20. The method of Example 19 further comprising: (d) receiving at the DFT processor from the correlator the first quantity of blocks of signal values r[n] generated by the correlator; and (e) using the DFT correlator, generating a first quantity of blocks of signal values T[k] of a discrete Fourier transform, each block of the first quantity being of length Z/d' where d' is an integer and Z is size of a slow time dimension, from corresponding blocks of the first sequence of the signal values r[n], wherein each block of the first quantity of blocks of signal values T[k] includes at least one candidate object detection, the first quantity of blocks being selected based on one or more of (i) a velocity estimate, for at least one detected object, based on the first sequence of the signal values r[n], (ii) a velocity estimate, for at least one detected object, received from one or more sensors external to the radar apparatus, or (iii) data received from a digital map that includes a current location of the radar apparatus.

Example 21. The method of any one of Examples 12 through 20 further comprising, using the correlator, (i) generating a sequence of Lc signal values of r[n] from Lc signal values of the first and second sequences of signal values and (ii) excluding from further processing those signal values of r[n] that are not among the first quantity of blocks.

Example 22. The method of any one of Examples 12 through 21 further comprising: (d) receiving at the radar control circuitry, before receiving the first sequence of signal values, the corresponding previous first sequence of signal values of length Lc from each radar transmitter; (e) receiving at the radar control circuitry, before receiving the second sequence of signal values, the corresponding previous second sequence of signal values of length Lc from each radar receiver; and (f) using the correlator, generating, before generating the first quantity of blocks of signal values r[n], the previously generated sequence of signal values of length Lc of the correlation from the previous first and second sequences of Lc signal values.

Example 23. A radar apparatus comprising: (a) radar control circuitry including at least a correlator and a DFT processor; (b) a set of one or more radar transmitters operably coupled to the radar control circuitry; and (c) a set of one or more radar receivers operably coupled to the radar control circuitry, wherein the correlator is structured, connected, or programmed to: (d) receive from each radar transmitter corresponding sequences of signal values c[n] that represent radar signals transmitted by that radar transmitter; (e) receive from each radar receiver corresponding sequences of signal values x[n] that represent radar signals received by that radar receiver, wherein the received radar signals include at least one reflected radar signal corresponding to a reflection of at least one of the radar signals transmitted by the set of radar transmitters; and (f) generate sequences of signal values r[n] of length Lr of a correlation from corresponding sequences of the signal values x[n] and c[n] and transmit the sequences of signal values r[n] to the DFT processor, and wherein the DFT processor is structured, connected, or programmed to: (g) receive from the correlator a first sequence of Lr signal values r[n] generated by the correlator; and (h) generate a first quantity of blocks of signal values T[k] of a discrete Fourier transform, each block of the first quantity being of length Z/d' where d' is an integer and Z is size of a slow time dimension, from corresponding blocks of the first sequence of the signal values r[n], wherein each block of the first quantity of blocks includes at least one candidate object detection, the first quantity of blocks being selected based on one or more of (i) a velocity estimate, for at least one detected object, based on the first sequence of the signal values r[n], (ii) a velocity estimate, for at least one detected object, received from one or more sensors external to the radar apparatus, or (iii) data received from a digital map that includes a current location of the radar apparatus.

Example 24. The radar apparatus of Example 23 wherein the DFT processor is structured, connected, or programmed to: (g') receive from the correlator a second sequence of Lr signal values r[n] generated by the correlator; and (h') generate a second quantity of blocks of signal values T[k] of length Z/d', different from the first quantity of blocks, from corresponding blocks of the second sequence of the signal values r[n], wherein each block of the second quantity of blocks includes at least one candidate object detection, the second quantity of blocks being selected based on one or more of (i) a velocity estimate, for at least one detected object, based on the second sequence of the signal values r[n], (ii) a different velocity estimate, for at least one detected object, received from one or more sensors external to the radar apparatus, or (iii) different data received from a digital map that includes a different current location of the radar apparatus.

Example 25. The radar apparatus of any one of Examples 23 or 24 wherein the DFT processor is structured, connected, or programmed as a slow time Doppler processor so as to generate, based at least in part on the first quantity of blocks of the signal values T[k], corresponding estimated speed, velocity, or radial velocity for each of one or more detected objects.

Example 26. A signal-processing apparatus comprising: (a) control circuitry including at least a first DFT processor; and (b) a set of one or more first electronic signal sources operably coupled to the control circuitry, wherein the first DFT processor is structured, connected, or programmed to: (c) receive from each first electronic signal source corresponding sequences of signal values s1[n] having length Lc that represent first electronic signals from that first electronic signal source; and (d) generate a first quantity of blocks of signal values S1[k] of a discrete Fourier transform of s1[n], each block of the first quantity being of length Lc/d' where d' is an integer, from corresponding blocks of the first sequence of the signal values s1[n], wherein each block of the first quantity of blocks includes at least one candidate detection, the first quantity of blocks being selected based on data or signal values indicative of a level of sparsity of candidate detections within the sequence of signal values s1[n].

Example 27. The signal-processing apparatus of Example 26 further comprising: (a') a second DFT processor and an IFFT processor included in the control circuitry; and (b') a set of one or more second electronic signal sources operably coupled to the control circuitry, wherein the second DFT processor is structured, connected, or programmed to: (c') receive from each second electronic signal source corresponding sequences of signal values s2[n] having length Lc that represent first electronic signals from that second electronic signal source; and (d') generate a first quantity of blocks of signal values S2[k] of a discrete Fourier transform of s2[n], each block of the first quantity being of length Lc/d' where d' is an integer, from corresponding blocks of the first sequence of the signal values s2[n], wherein each block of signal values S2[k] corresponds to one of the first quantity of blocks of the signal values S1[k], and wherein the control circuity is structured, connected, or programmed to: (e) generate the product of S1[k] and S2[k]; and (f) using the IFFT processor, generate an inverse Fourier transform r[n] of the product of S1[k] and S2[k], r[n] being a correlation of the sequences of signal values s1[n] and s2[n].

This disclosure is illustrative and not limiting. Further modifications will be apparent to one skilled in the art in light of this disclosure and are intended to fall within the scope of the present disclosure or appended claims. It is intended that equivalents of the disclosed example embodiments and methods, or modifications thereof, shall fall within the scope of the present disclosure or appended claims.

In the foregoing Detailed Description, various features may be grouped together in several example embodiments for the purpose of streamlining the disclosure. This method of disclosure is not to be interpreted as reflecting an intention that any claimed embodiment requires more features than are expressly recited in the corresponding claim. Rather, as the appended claims reflect, one or more embodiments may implement less than all features of a single disclosed example. Therefore, the present disclosure shall be construed as implicitly disclosing any embodiment having any suitable subset of one or more features - which features are shown, described, or claimed in the present application - including those subsets that may not be explicitly disclosed herein. A "suitable" subset of features includes only features that are neither incompatible nor mutually exclusive with respect to any other feature of that subset. Accordingly, the appended claims are hereby incorporated in their entirety into the Detailed Description, with each claim standing on its own as a separate disclosed embodiment. In addition, each of the appended dependent claims shall be interpreted, only for purposes of disclosure by said incorporation of the claims into the Detailed Description, as if written in multiple dependent form and dependent upon all preceding claims with which it is not inconsistent. It should be further noted that the cumulative scope of the appended claims can, but does not necessarily, encompass the whole of the subject matter disclosed in the present application.

The following interpretations shall apply for purposes of the present disclosure and appended claims. The words "comprising," "including," "having," and variants thereof, wherever they appear, shall be construed as open ended terminology, with the same meaning as if a phrase such as "at least" were appended after each instance thereof, unless explicitly stated otherwise. The article "a" shall be interpreted as "one or more" unless "only one," "a single," or other similar limitation is stated explicitly or is implicit in the particular context; similarly, the article "the" shall be interpreted as "one or more of the" unless "only one of the," "a single one of the," or other similar limitation is stated explicitly or is implicit in the particular context. The conjunction "or" is to be construed inclusively unless: (i) it is explicitly stated otherwise, e.g., by use of "either... or," "only one of," or similar language; or (ii) two or more of the listed alternatives are understood or disclosed (implicitly or explicitly) to be incompatible or mutually exclusive within the particular context. In that latter case, "or" would be understood to encompass only those combinations involving non-mutually-exclusive alternatives. In one example, each of "a dog or a cat," "one or more of a dog or a cat," and "one or more dogs or cats" would be interpreted as one or more dogs without any cats, or one or more cats without any dogs, or one or more of each.

For purposes of the present disclosure or appended claims, when a numerical quantity is recited (with or without terms such as "about," "about equal to," "substantially equal to," "greater than about," "less than about," and so forth), standard conventions pertaining to measurement precision, rounding error, and significant digits shall apply, unless a differing interpretation is explicitly set forth, or if a differing interpretation is implicit or inherent (e.g., some small integer quantities). For null quantities described by phrases such as "equal to zero," "absent," "eliminated," "negligible," "prevented," and so forth (with or without terms such as "about," "substantially," and so forth), each such phrase shall denote the case wherein the quantity in question has been reduced or diminished to such an extent that, for practical purposes in the context of the intended operation or use of the disclosed or claimed apparatus or method, the overall behavior or performance of the apparatus or method does not differ from that which would have occurred had the null quantity in fact been completely removed, exactly equal to zero, or otherwise exactly nulled. Terms such as "parallel," "perpendicular," "orthogonal," "flush," "aligned," and so forth shall be similarly interpreted (with or without terms such as "about," "substantially," and so forth).

For purposes of the present disclosure and appended claims, any labelling of elements, steps, limitations, or other portions of an embodiment, example, or claim (e.g., first, second, third, etc., (a), (b), (c), etc., or (i), (ii), (iii), etc.) is only for purposes of clarity, and shall not be construed as implying any sort of ordering or precedence of the portions so labelled. If any such ordering or precedence is intended, it will be explicitly recited in the embodiment, example, or claim or, in some instances, it will be implicit or inherent based on the specific content of the embodiment, example, or claim. In the appended claims, if the provisions of 35 USC § 112(f) are desired to be invoked in an apparatus claim, then the word "means" will appear in that apparatus claim. If those provisions are desired to be invoked in a method claim, the words "a step for" will appear in that method claim. Conversely, if the words "means" or "a step for" do not appear in a claim, then the provisions of 35 USC § 112(f) are not intended to be invoked for that claim.

If any one or more disclosures are incorporated herein by reference and such incorporated disclosures conflict in part or whole with, or differ in scope from, the present disclosure, then to the extent of conflict, broader disclosure, or broader definition of terms, the present disclosure controls. If such incorporated disclosures conflict in part or whole with one another, then to the extent of conflict, the later-dated disclosure controls.

The Abstract is provided as required as an aid to those searching for specific subject matter within the patent literature. However, the Abstract is not intended to imply that any elements, features, or limitations recited therein are necessarily encompassed by any particular claim. The scope of subject matter encompassed by each claim shall be determined by the recitation of only that claim.

**Claims**

1. A radar apparatus comprising:

   radar control circuitry including at least a correlator;
   a set of one or more radar transmitters operably coupled to the radar control circuitry; and
   a set of one or more radar receivers operably coupled to the radar control circuitry,
   wherein the correlator is structured, connected, or programmed to:

   receive from each radar transmitter corresponding first sequences of signal values having length Lc;
   receive from each radar receiver corresponding second sequences of signal values having length Lc that represent radar signals received by that radar receiver, wherein the received radar signals include at least one reflected radar signal corresponding to a reflection of at least one radar signal transmitted by the set of radar transmitters; and
generate a first quantity of blocks of signal values r[n] of a correlation, each block of the first quantity being of length Lc/d where d is an integer, from corresponding blocks of the first and second sequences of signal values, wherein each block of the first quantity of blocks includes at least one candidate object detection, the first quantity of blocks being selected based on one or more of (i) a sequence of signal values having length Lc of a correlation previously generated by the correlator from previous first and second sequences of Lc signal values, (ii) a range estimate, for at least one detected object, received from one or more sensors external to the radar apparatus, or (iii) data received from a digital map that includes a current location of the radar apparatus.

2. The radar apparatus of claim 1 wherein the correlator is structured, connected, or programmed to generate a second quantity of blocks of length Lc/d of signal values r[n], different from the first quantity of blocks, from corresponding blocks of subsequent first and second sequences of Lc signal values, different from the first and second sequences, wherein each block of the second quantity of blocks includes at least one candidate object detection, the second quantity of blocks being selected based on one or more of (i) a different sequence of signal values having length Lc of a different correlation previously generated by the correlator from different previous first and second sequences of signal values, (ii) a different range estimate, for at least one detected object, received from the one or more sensors external to the radar apparatus, or (iii) different data received from the digital map that includes a different current location of the radar apparatus.

3. The radar apparatus of any one of claims 1 or 2 wherein the radar control circuitry is structured, connected, or programmed to generate, based at least in part on the first or second quantity of blocks of the signal values r[n] generated by the correlator, corresponding estimated range for each of one or more detected objects.

4. The radar apparatus of claim 1 wherein the correlator is structured, connected, or programmed as a fast-time FFT correlator.

5. The radar apparatus of claim 1 further comprising a slow-time DFT processor structured, connected, or programmed to generate an estimated speed, velocity, or radial velocity of one or more detected objects based on the first quantity of blocks of the signal values r[n] generated by and received from the correlator.

6. The radar apparatus of claim 5 wherein the DFT processor is structured, connected, or programmed to:

receive from the correlator the first quantity of blocks of signal values r[n] generated by the correlator; and
generate a first quantity of blocks of signal values T[k] of a discrete Fourier transform, each block of the first quantity being of length Z/d' where d' is an integer and Z is size of a slow time dimension, from corresponding blocks of the first sequence of the signal values r[n], wherein each block of the first quantity of blocks of signal values T[k] includes at least one candidate object detection, the first quantity of blocks being selected based on one or more of (i) a velocity estimate, for at least one detected object, based on the first sequence of the signal values r[n], (ii) a velocity estimate, for at least one detected object, received from one or more sensors external to the radar apparatus, or (iii) data received from a digital map that includes a current location of the radar apparatus.

7. The radar apparatus of claim 1 wherein the correlator is structured, connected, or programmed so as to generate, before generating the first quantity of blocks of signal values r[n], the previously generated sequence of Lc signal values of the correlation from the previous first and second sequences of Lc signal values.

8. A method employing a radar apparatus, wherein the radar apparatus comprises (i) radar control circuitry including at least a correlator, (ii) a set of one or more radar transmitters operably coupled to the radar control circuitry, and (iii) a set of one or more radar receivers operably coupled to the radar control circuitry, the method comprising:

receiving at the radar control circuitry corresponding first sequences of signal values of length Lc from each radar transmitter;
receiving at the radar control circuitry corresponding second sequences of signal values of length Lc from each radar receiver; and
using the correlator, generating a first quantity of blocks of signal values r[n] of a correlation, each block of the first quantity being of length Lc/d where d is an integer, from corresponding blocks of the first and second sequences of signal values, wherein each block of the first quantity of blocks includes at least one candidate object detection, the first quantity of blocks being selected based on one or more of (i) a sequence of signal values having length Lc of a correlation previously generated by the correlator from previous first and second sequences of Lc signal values, (ii) a range estimate, for the at least one candidate object detection, received from one or more sensors external to the radar apparatus, or (iii) data received from a digital map that includes a current location of the radar apparatus.

9. The method of claim 8 further comprising:

receiving at the radar control circuitry a corresponding subsequent first sequence of signal values of length Lc, different from the first sequence of signal values, from each radar transmitter;
receiving at the radar control circuitry a corresponding subsequent second sequence of signal values of length Lc, different from the second sequence of signal values, from each radar receiver; and
using the correlator, generating a second quantity of blocks of length Lc/d of signal values r[n], different from the first quantity of blocks, from corresponding blocks of the subsequent first and second sequences of signal values, wherein each block of the second quantity of blocks includes at least one candidate object detection, the second quantity of blocks being selected based on one or more of (i) a different sequence of signal values having length Lc of a different correlation previously generated by the correlator from different previous first and second sequences of Lc signal values, (ii) a different range estimate, for the at least one candidate object detection, received from the one or more sensors external to the radar apparatus, or (iii) different data received from the digital map that includes a different current location of the radar apparatus.

10. The method of any one of claims 8 or 9 further comprising generating, based at least in part on the first or second quantity of blocks of the signal values r[n] generated by the correlator, corresponding estimated range for each of one or more detected objects.

11. The method of claim 8 wherein the correlator is structured, connected, or programmed as a fast-time FFT correlator.

12. The method of claim 8 wherein the radar control circuitry further comprises a slow-time DFT processor, the method further comprising, using the slow-time DFT processor, generating an estimated speed, velocity, or radial velocity of one or more detected objects based on the first quantity of blocks of the signal values r[n] generated by and received from the correlator.

13. The method of claim 12 further comprising:

receiving at the DFT processor from the correlator the first quantity of blocks of signal values r[n] generated by the correlator; and

using the DFT correlator, generating a first quantity of blocks of signal values T[k] of a discrete Fourier transform, each block of the first quantity being of length Z/d' where d' is an integer and Z is size of a slow time dimension, from corresponding blocks of the first sequence of the signal values r[n], wherein each block of the first quantity of blocks of signal values T[k] includes at least one candidate object detection, the first quantity of blocks being selected based on one or more of (i) a velocity estimate, for at least one detected object, based on the first sequence of the signal values r[n], (ii) a velocity estimate, for at least one detected object, received from one or more sensors external to the radar apparatus, or (iii) data received from a digital map that includes a current location of the radar apparatus.

14. The method of claim 8 further comprising, using the correlator, (i) generating a sequence of Lc signal values of r[n] from Lc signal values of the first and second sequences of signal values and (ii) excluding from further processing those signal values of r[n] that are not among the first quantity of blocks.

15. The method of claim 8 further comprising:

receiving at the radar control circuitry, before receiving the first sequence of signal values, the corresponding previous first sequence of signal values of length Lc from each radar transmitter;

receiving at the radar control circuitry, before receiving the second sequence of signal values, the corresponding previous second sequence of signal values of length Lc from each radar receiver; and

using the correlator, generating, before generating the first quantity of blocks of signal values r[n], the previously generated sequence of signal values of length Lc of the correlation from the previous first and second sequences of Lc signal values.

FIG. 1

$$X[k] = \sum_{n=0}^{L_C-1} x[n]e^{-i\frac{2\pi}{L_C}kn}, \qquad\qquad k = 0,1,2\;\bullet\bullet\bullet, L_C - 1$$

$$C[k] = \sum_{n=0}^{L_C-1} c[n]e^{-i\frac{2\pi}{L_C}kn}, \qquad\qquad k = 0,1,2\;\bullet\bullet\bullet, L_C - 1$$

$$r[n] = \frac{1}{L_C} \sum_{k=0}^{L_C-1} X[k]C[k]^{*}e^{i\frac{2\pi}{L_C}kn}, \qquad\qquad n = 0,1,2\;\bullet\bullet\bullet, L_C - 1$$

## FIG. 2A

## FIG. 2B

FIG. 2C

FIG. 3A

FIG. 3B

EP 4 776 020 A1

FIG. 4

FIG. 5A

FIG. 5B

FIG. 5C

$$X_k = \sum_{n=0}^{L_C-1} x_n e^{-i\frac{2\pi}{L_C}kn} = \sum_{n=0}^{\frac{L_C}{4}-1} (x_1 + x_2 e^{-i\frac{2\pi}{4}k} + x_3 e^{-i\frac{4\pi}{4}k} + x_4 e^{-i\frac{6\pi}{4}k}) e^{-i\frac{2\pi n}{L_C}}$$

$$\tilde{X}_1 = X_{4k} = \sum_{n=0}^{L_C/4-1} (x_n + x_{n+\frac{L_C}{4}} + x_{n+\frac{2L_C}{4}} + x_{n+\frac{3L_C}{4}}) e^{-i\frac{2\pi}{L_C/4}kn}$$

$$\tilde{X}_2 = X_{4k+1} = \sum_{n=0}^{L_C/4-1} (x_n - i \cdot x_{n+\frac{L_C}{4}} - x_{n+\frac{2L_C}{4}} + i \cdot x_{n+\frac{3L_C}{4}}) e^{-i\frac{2\pi n}{L_C}} e^{-i\frac{2\pi}{L_C/4}kn}$$

$$\tilde{X}_3 = X_{4k+2} = \sum_{n=0}^{L_C/4-1} (x_n - x_{n+\frac{L_C}{4}} + x_{n+\frac{2L_C}{4}} - x_{n+\frac{3L_C}{4}}) e^{-i\frac{4\pi n}{L_C}} e^{-i\frac{2\pi}{L_C/4}kn}$$

$$\tilde{X}_4 = X_{4k+3} = \sum_{n=0}^{L_C/4-1} (x_n - i \cdot x_{n+\frac{L_C}{4}} - x_{n+\frac{2L_C}{4}} - i \cdot x_{n+\frac{3L_C}{4}}) e^{-i\frac{6\pi n}{L_C}} e^{-i\frac{2\pi}{L_C/4}kn}$$

FIG. 5D

FIG. 5E

FIG. 5F

$$\tilde{R}_1 = \tilde{X}_1 \tilde{C}_1^*, \quad \tilde{R}_2 = \tilde{X}_2 \tilde{C}_2^*, \quad \tilde{R}_3 = \tilde{X}_3 \tilde{C}_3^*, \quad \tilde{R}_4 = \tilde{X}_4 \tilde{C}_4^*$$

$$r_1 = \frac{1}{L_C} \sum_{k=0}^{L_C-1} R[k] e^{i\frac{2\pi}{L_C}kn} = \frac{1}{L_C} \left( \sum_{k=0}^{\frac{L_C}{4}-1} \tilde{R}_1[k] e^{i\frac{2\pi}{L_C}4kn} + \sum_{k=0}^{\frac{L_C}{4}-1} \tilde{R}_2[k] e^{i\frac{2\pi}{L_C}(4k+1)n} + \sum_{k=0}^{\frac{L_C}{4}-1} \tilde{R}_3[k] e^{i\frac{2\pi}{L_C}(4k+2)n} + \sum_{k=0}^{\frac{L_C}{4}-1} \tilde{R}_4[k] e^{i\frac{2\pi}{L_C}(4k+3)n} \right)$$

$$= \frac{1}{4} \left( \frac{1}{L_C/4} \sum_{k=0}^{\frac{L_C}{4}-1} \tilde{R}_1[k] e^{i\frac{2\pi}{L_C/4}kn} + \frac{1}{L_C/4} \sum_{k=0}^{\frac{L_C}{4}-1} \tilde{R}_2[k] e^{i\frac{2\pi}{L_C/4}kn} e^{i\frac{2\pi}{L_C}n} + \right.$$

$$\left. \frac{1}{L_C/4} \sum_{k=0}^{\frac{L_C}{4}-1} \tilde{R}_3[k] e^{i\frac{2\pi}{L_C/4}kn} e^{i\frac{2\pi}{L_C}2n} + \frac{1}{L_C/4} \sum_{k=0}^{\frac{L_C}{4}-1} \tilde{R}_4[k] e^{i\frac{2\pi}{L_C/4}kn} e^{i\frac{2\pi}{L_C}3n} \right), n = 0,1,2 \cdots, \frac{L_C}{4}-1$$

$$= \frac{1}{4} \left( \tilde{r}_1 + \tilde{r}_2 e^{i\frac{2\pi}{L_C}n} + \tilde{r}_3 e^{i\frac{2\pi}{L_C}2n} + \tilde{r}_4 e^{i\frac{2\pi}{L_C}3n} \right)$$

FIG. 5G

BENDS

FIG. 6B

T-JUNCTION

FIG. 6A

\# Tx = 4
\# Rx = 4
SLOW TIME SIZE = 2048

CODE FAMILY = 'GOLD'
CODE LENGTH = 8191
\# ACCUMULATION = 1

| | RCS | DISTANCE | VELOCITY | DOA |
| --- | --- | --- | --- | --- |
| OBJECT 1 | 10 dBsm | 80 m | 50 m/s | 0° |

| d = 8 | TOTAL PROCESSING | RANGE PROCESSING | VELOCITY PROCESSING |
| --- | --- | --- | --- |
| ORIGINAL METHOD | 67.78s | 27.36s | 29.283s |
| ADAPTIVE METHOD | 24.43s | 20.64s | 3.39s |

| ADAPTIVE METHOD | TOTAL PROCESSING | RANGE PROCESSING | VELOCITY PROCESSING |
| --- | --- | --- | --- |
| d = 8 | 24.43s | 20.64s | 3.39s |
| d = 16 | 20.71s | 19.01s | 1.53s |

FIG. 7

FIG. 8

Europäisches
Patentamt

European
Patent Office

Office européen
des brevets

# EUROPEAN SEARCH REPORT

Application Number

EP 25 15 0625

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/231652 A1 (RAO RAGHUNATH K [US] ET AL) 16 August 2018 (2018-08-16) | 1-15 | INV.<br>G01S7/35 |
| Y | * paragraphs [0005], [0010], [0037], [0039], [0041], [0053], [0054], [0059], [0064], [0066], [0069] – [0072]; figures 1, 3, 5-8, 10-14 *<br>----- | 5,6,12,13 | G01S13/32<br>G01S13/42<br>G01S13/931 |
| Y | WO 2020/183392 A1 (UHNDER INC [US]) 17 September 2020 (2020-09-17)<br>* paragraphs [0084] – [0086]; figures 1,2,15,16 *<br>----- | 5,6,12,13 | ADD.<br>G01S13/86 |

TECHNICAL FIELDS
SEARCHED    (IPC)

G01S

The present search report has been drawn up for all claims

| Place of search | Date of completion of the search | Examiner |
|---|---|---|
| Munich | 2 May 2025 | Schmelz, Christian |

EPO FORM 1503 03.82 (P04C01)

## ANNEX TO THE EUROPEAN SEARCH REPORT
## ON EUROPEAN PATENT APPLICATION NO.

EP 25 15 0625

02-05-2025

| Patent document cited in search report | Publication date | Patent family member(s) | | Publication date |
|---|---|---|---|---|
| US 2018231652 A1 | 16-08-2018 | US | 2018231652 A1 | 16-08-2018 |
| | | US | 2021156979 A1 | 27-05-2021 |
| | | WO | 2018146530 A1 | 16-08-2018 |
| WO 2020183392 A1 | 17-09-2020 | US | 2020292665 A1 | 17-09-2020 |
| | | US | 2020292666 A1 | 17-09-2020 |
| | | US | 2024288539 A1 | 29-08-2024 |
| | | WO | 2020183392 A1 | 17-09-2020 |
| | | WO | 2020183421 A1 | 17-09-2020 |

EPO FORM P0459